# EUROPEAN PATENT SPECIFICATION

(11) **EP 2 184 904 B1**
(45) Date of publication and mention of the grant of the patent: **13.09.2017**
(21) Application number: 08305781.0
(22) Date of filing: 06.11.2008
(51) Int. Cl.: H04L 12/24, H04L 29/08

(54) **Method for automatically installing and configuring application and services on devices which comprise lifecycle management functionalities and corresponding client premises equipments, auto configuration server and module**
Verfahren zur automatischen Installations- und Konfigurationsanwendung und Dienste und Vorrichtungen mit Lebenszyklusverwaltungsfunktionen und entsprechende Geräte auf dem Kundengelände, Konfigurationsserver und Modul
Procédé pour l'installation automatique et la configuration d'une application et de services sur des dispositifs qui comprend des fonctionnalités de gestion du cycle de vie et des équipements correspondants sur le site du client, serveur et module d'auto-configuration

(43) Date of publication of application: 12.05.2010
(73) Proprietor: ALCATEL LUCENT, 92100 Boulogne-Billancourt (FR)
(72) Inventor: Justen, Pascal, 1150, Brussel (BE); Acke, Willem, 2820, Rijmenam (BE); Stevens, Christoph, 9190, Stekene (BE); Liekens, Werner, 2580, Sint-Katelijne-Waver (BE); Vermoesen, Luc, 2880, Bornem (BE); Van Leeuwen, Tom, 9032 Wondelgem (BE); De Loof, Jourik, 2630, Aartselaar (BE)
(74) Representative: ALU Antw Patent Attorneys

(56) References cited:
- EP-A- 1 835 690
- WO-A-2008/032922
- US-A1- 2003 191 823
- US-A1- 2005 210 474

## Description

### Technical field of the invention

The present invention relates to the field of remotely configuring devices over communication networks.

### Background of the invention

Founded in March 1999, the OSGi^{™} Alliance (Open Service Gateway initiative) specifies, creates, advances and promotes wide industry adoption of an open service delivery and management platform. The OSGi^{™} technology is designed to ease the development of new services and applications for the latest generation of networked devices. Adding an OSGi^{™} service platform to a device, enables managing the lifecycle of the software components in the device from anywhere in the network. Software components can be installed, updated or removed on the fly without having to disrupt the operation of the device. The OSGi^{™} service platform is a Java based service platform running on top of a Java Virtual Machine (JVM) residing in the device, and can be remotely managed. The core part of the specifications is a framework that defines an application lifecycle model and a service registry. Based on this framework, a large number of OSGi^{™} Services have been defined.

The DSL Forum is an international industry consortium of service providers, equipment and component manufacturers and other interested parties, focussing on developing broadband DSL. The DSL Forum develops technical specifications and indirectly standards that enable delivery of DSL products and services. More information about the DSL Forum is available from its internet site http://www.dslforum.org.

One of those technical specifications is the DSL forum's Technical report TR-069 (e.g. issue 1, amendment 2, dating from December 2007 [also referred to as version v1.1 for the purpose of this description]), specifying the CPE WAN Management Protocol (also referred to as CWMP or TR-069). The TR-069 Management Protocol and corresponding network architectures allow communication between a Customer Premises Equipment (CPE) and an automatic configuration server (ACS). It defines a mechanism that encompasses secure auto-configuration of a CPE, and also incorporates other CPE management functions into a common framework.

Today, large-scale software deployment on home devices (e.g. a router or gateway) is still limited to monolithic and inter-independent software applications. With the introduction of a flexible, hardware-independent and open service platform (e.g. OSGi/Java), applications can be used on a wide range of devices, rather then only on a particular predetermined device. Instead of producing device-specific monolithic blocks, applications are being fragmented into reusable and portable software components, for instance called bundles in OSGi terminology. But promoting reusability has consequences in terms of ease of service and application deployment.

Recently there has been an increasing interest from operators manage open service platforms in the home of the users/clients.

A number of problems needs to be solved in order to efficiently allow this.

With the growing number of devices, also the number of applications can be expected to increase. End-users are expected to be provided with services and applications on an individual basis (e.g. on demand). From the operator and service provider point of view, a mesh of very complex software dependencies can then be created, which will limit the exploitation of this outermost flexible deployment idea.

Physical constraints of devices (especially small portable devices) prevent to deploy 'blindly'. Therefore memory and storage limitations, CPU utilization, software duplicates, unresolved references etc., but also upgrades, software package replacements, rollbacks etc. need to be carefully managed and monitored.

Moreover, operators need to have a view on the correct installation of full end-user applications, not only of individual bundles which are only constituents of applications.

There exists thus a need for extra degrees of management in order to make component oriented software mass deployment successful.

EP 1 835 690 describes a TR69 based service interface for OSGi bundles. WO 2008/032922 describes an apparatus and method for lightweighting application through duplicated application management in OSGi middleware environment of embedded terminal. US 2005/0210474 describes a tunable engine, method and program product for resolving prerequisites for client devices in an OSGI framework. US 2003/0191823 describes a system and method for providing customizable device capabilities to network equipment in a non-service affecting manner.

### Summary of the invention

When terms as "first", "second", "third" and the like are used, this does not necessarily mean that a sequential or that a chronological order is to be assumed.

The term "comprising", should be interpreted as such that it does not exclude other elements or steps.

In preferred embodiments of the present invention a remote management protocol (RMP) is used, which can advantageously be a CPE WAN management protocol (CWMP) defined by the DSL forum's Technical Report TR-069 (e.g. version V1.1 dating from December 2007, but also including earlier or future versions comprising the relevant functionalities, as would be recognised by the person of ordinary skill) for secure auto-configuration as well as other CPE management functions as for instance but not only dependency checking.

For the purpose of the present invention, the following terminology has been used, corresponding, unless mentioned otherwise, with the terminology of the TR-069 specification. The term "Device" is used in its ordinary sense and not as in TR-069. The CPE is TR-069 can thus be seen as an example of a device for the purpose of the present description.
- ACS: Auto-Configuration Server: a means for automatically configuring a Customer Premises Equipment, e.g. a component in the broadband network responsible for auto-configuration of the CPE for advanced services. The ACS can also be used for lifecycle management of the services deployed on the CPE (It is to be noted that a collection of ACS's behind a load balancer is considered a single ACS for the purposes of the present description).
- CPE Customer Premises Equipment; an example of a device present at the customer premises. It preferably refers to any TR-069-compliant device. Examples of customer premises equipments are Set Top Boxes, internet/service gateway devices and LAN-side end devices, wireless sensor gateways, modems and telephones.

The state of the art, on which the preamble of claim 1 is based, comprises a method for automatically installing an application or service on a CPE, which comprises lifecycle management operations, by means of an associated ACS, according to the TR-069 specification of the Broadband Forum, the method comprising the step of dependency checking during the process of installation of said application or service on said CPE.

The existing solution comprises downloading individual bundles to the OSGI platform and to have only dependencies, according to the OSGi specification, resolved by the OSGi platform (without having any knowledge about what applications and services are already deployed and running).

It is an object of the present invention to provide a method which solves at least one of the above problems.

This is achieved by the characterizing features of claim 1.

According to a first aspect of the present invention a method is disclosed for automatically installing an application or service on a Client Premises Equipment (CPE), which comprises lifecycle management operations, by means of an associated Automatic Configuration Server (ACS), according to the TR-069 specification of the broadband forum, the method comprising the step of dependency checking during the process of installation of said application or service on the CPE, wherein the method further comprises checking for dependency information for the application or service to be installed on the CPE, by the ACS before installing the application on the CPE.

According to preferred embodiments of the present invention the CPE comprises an OSGI platform that supports lifecycle management operations. The CPE can be preferably a service gateway (SGW). Note here that OSGi is taken as example, and that other existing and/or future lifecycle management are not excluded.

According to preferred embodiments the dependency information comprises application dependency information, which is not covered by the bundle dependency information. The application dependency information can comprise OSGI service objects version dependencies, resource usage (disk storage, RAM usage, CPU cycle consumption), start up sequence (with start level adapted to the platform), service and user-related configuration data, package version.

According to embodiments of the present invention the dependency information comprises bundle dependency information. The bundle dependency information (as specified in the bundle Manifest file) can comprise information relating to Java package import/export, the execution environment (e.g. Java version, Java profile, Java edition, OSGI version), native platform information (processor information/type, (name and version of) operating system), service object names.

According to embodiments the dependency information can thus comprise application dependency information which is not covered by the bundle dependency information, and bundle dependency information.

According to preferred embodiments of the present invention the checking of the application dependency information can comprise checking system requirements information.

According to preferred embodiments the method further comprises storing dependency information on a dependency information storage means at the ACS or accessible by the ACS. The dependency information can be stored in the form of a "bundle container". The bundle container can be seen as a (static) template which specifies all the dependencies as specified above for a service/application. When the container must be installed on a predetermined CPE/SGW, the ACS can compare the bundle container information with the actual bundle inventory and configuration status of the CPE/SGW, the application/service specific configuration data, and the user specific configuration data (which can be pushed or retrieved from a different server). From this comparison, the ACS can generate a scenario in order to install this service/application on this particular CPE/SGW for the given user. The actual bundle inventory can be fetched by means of TR-069 from the CPE/SGW (for instance by means of the audit mechanism), or stored in the local ACS database.

The bundle container can be seen as a checklist comprising rules, conditions and dependencies that must be met before any container installation is performed on a particular CPE/SGW. This means that, since the installation is CPE/SGW specific, the steps to be performed may differ for each CPE/SGW. In other words it can depend on the status of the CPE/SGW, the bundle and configuration data that have been deployed previously on the CPE/SGW.

According to embodiments of the present invention the method comprises trying to resolve the missing dependencies by the automatic configuration server (ACS) and informing an automatic configuration server managing server (ACS MS) controlled by an associated operator that the application cannot be installed when the bundle and/or application dependencies cannot be resolved. The automatic configuration managing server may then inform the CPE by means of a known mechanism. The ACS MS may further be adapted to indicate the problem and/or propose solution to the user/CPE.

According to embodiments of the present invention the method comprises trying to resolve the missing dependencies by the automatic configuration server and coordinating the installation and configuration of the service or application on the CPE by the ACS, when the dependencies can be resolved by the ACS. Hereby the ACS may instruct the CPE on how to install the application/service.

According to preferred embodiments the method comprises resolving the missing dependencies by the automatic configuration server, and transferring (in the means of TR-069 possibilities, i.e. instruct the CPE via a Download RPC) the application together with the resolved missing dependencies (e.g. in the form of TR-069 SetParameterValues) to the CPE. According to this embodiment the automatic configuration server can take all initiatives necessary, and the CPE does not need to perform dependency check on bundle retrieval actions.

According to embodiments of the present invention only a first part of the resolved missing dependencies are transferred from the ACS to the CPE, while a second part of the resolved missing dependencies are retrieved by the CPE itself, being instructed by the ACS.

According to embodiments of the present invention the method comprises transferring at least part of the dependency information from the ACS to the CPE, and using this information when installing the application on and by the CPE. According to these embodiments part of the required initiatives can be compiled into description files and transferred to the CPE/SGW.

According to a second aspect of the present invention an automatic configuration server is disclosed, which is adapted for managing at least one client premises equipment according to TR-069, further comprising a means for checking for application dependencies which are not covered by bundle dependencies for an application to be installed on the CPE.

According to embodiments of the present invention the ACS further comprises a data storage means for storing the application dependency information, and/or missing dependencies.

According to a third aspect of the present invention the client premises equipment is disclosed which comprises an OSGI platform (or any lifecycle management framework, existing or future), which is adapted for receiving and storing dependency information for an application to be installed, said dependency information comprising application dependency information which is not covered by the bundle dependency information.

According to a fourth aspect of the present invention a module is disclosed which is adapted for communicating with an automatic configuration server according to TR-069, which is further adapted for retrieving dependency information for a predetermined client premises equipment which is not covered by the bundle dependency information, and which is further adapted for resolving missing dependencies based on the dependency information.

Further aspects of the present invention are described by the dependent claims. The features from the dependent claims, features of any of the independent claims and any features of other dependent claims may be combined as considered appropriate to the person of ordinary skill, and not only in the particular combinations as defined by the claims.

### Brief description of the drawings

The accompanying drawings are used to illustrate embodiments of the present invention.

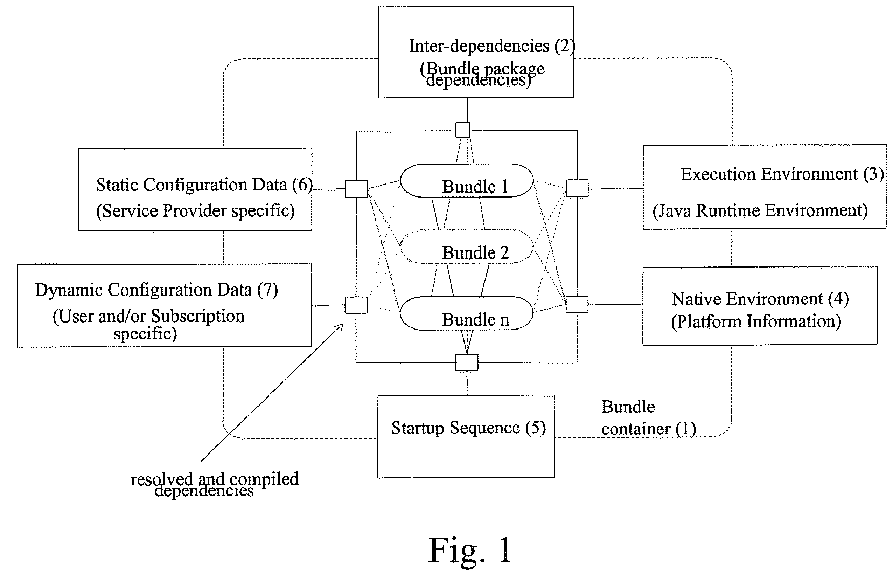

Fig. 1 illustrates the concept of "bundle container" as introduced in aspects of the present invention. Different types of dependencies exist. Dependencies regarding 'Interdependencies', 'Execution Environment' and 'Native Environment' are specified in OSGi. According to embodiments of the present invention extra overall application or service dependencies are taken into account (as for instance dependencies relating to startup sequence and/or static configuration data(service provider specific) and/or dynamic configuration data (user and/or subscription specific)), and/or dependencies are checked upfront in the ACS (HSM) in order to reduce deployment issues.

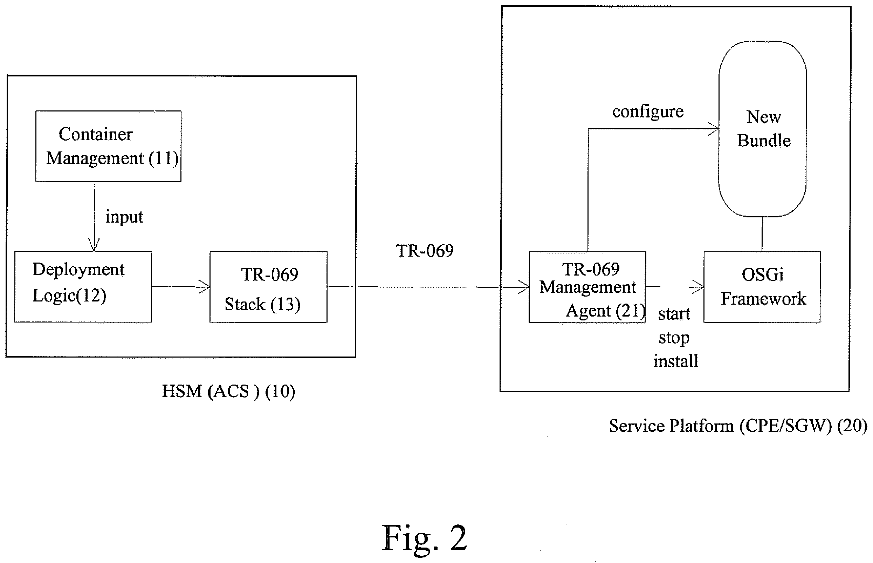

Fig. 2 illustrates a sequence of deployment commands executed at the ACS (HSM)-side, according to preferred embodiments of the present invention. The deployment scenario can be supported by dedicated deployment logic on the ACS (HSM)-side. Container management can feed the necessary instructions to the deployment logic that takes care to translate the commands into a set of TR-069 Remote Procedure Call's (RPC's).

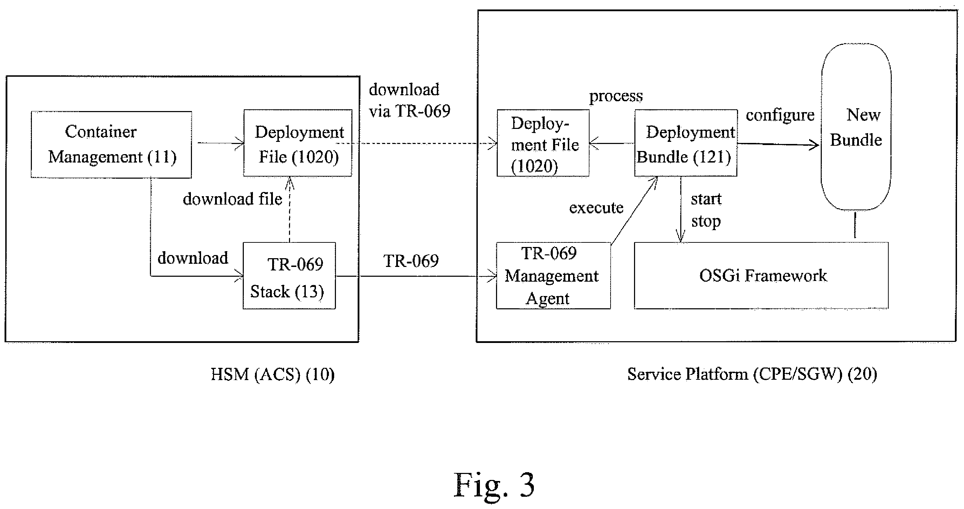

Fig. 3 illustrates a sequence of deployment commands executed at Service Platform Side, according to embodiments of the present invention. The Container Management can generate a deployment file which contains the deployment commands. It can be downloaded to the service platform (at the CPE/SGW) where it is further processed by the Deployment Bundle.
   In an alternative embodiment, the deployment file is not downloaded to the service platform, but pushed via a dedicated TR-069 parameter (via e.g. the SetParameterValue parameter).
   Typically, the Deployment Bundle can be integrated into the TR-069 Management Agent.

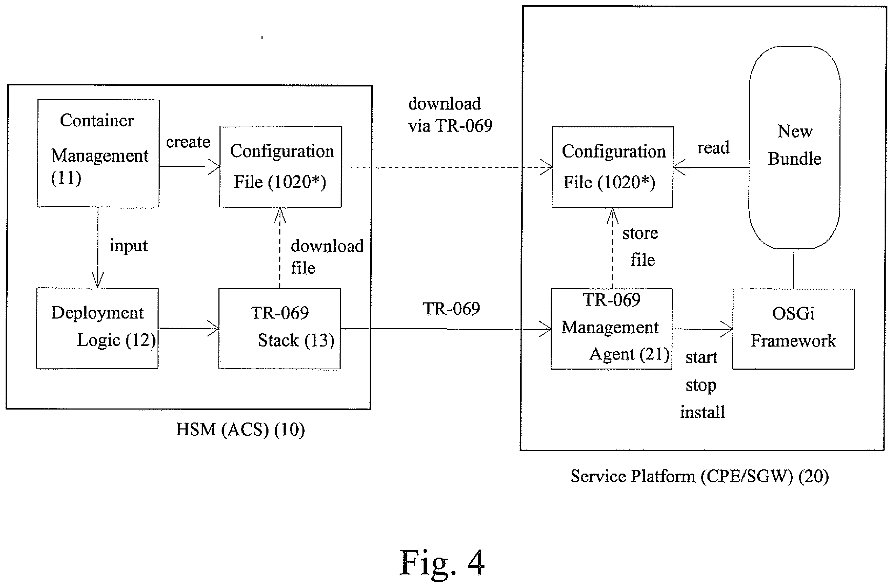

Fig. 4 illustrates embodiments according to the present invention, which are in a sense a combination of embodiments illustrated in Fig. 2 and Fig. 3. Here, the lifecycle management can be performed via TR-069 and the deployment file is downloaded.

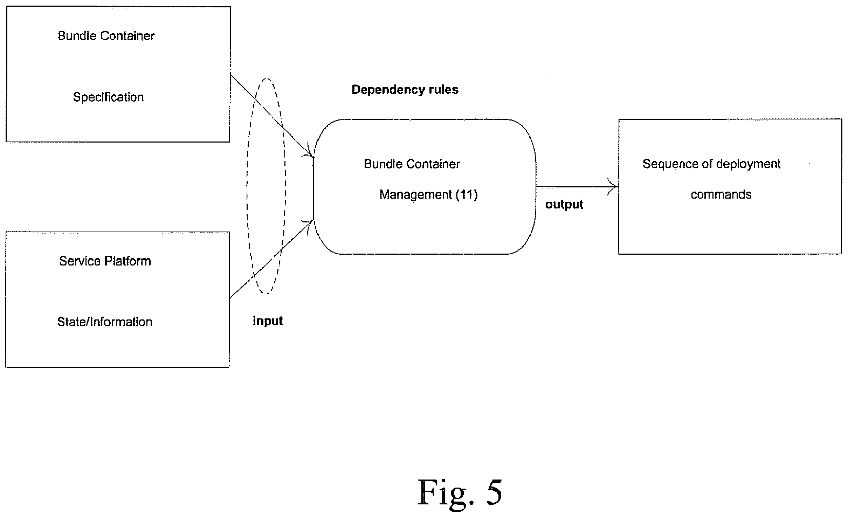

Fig. 5 illustrates a basic principle of the bundle container management process according to embodiments of the present invention.

Reference signs are chosen such that they are the same for similar or equal elements or features in different figures or drawings.

### Description of illustrative embodiments

The above and other advantageous features and objects of the invention will become more apparent and the invention will be better understood from the following detailed description when read in conjunction with the respective drawings.

The description of aspects of the present invention is performed by means of particular embodiments and with reference to certain drawings but the invention is not limited thereto. Depicted figures are only schematic and should not be considered as limiting. E.g. certain elements or features may be shown out of proportion or out of scale with respect to other elements.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

According to embodiments of the present invention, the ACS (for instance home service manager (HSM)) can participate proactively in the creation and deployment of end-user services and applications, comprising 'bundle containers' based on the necessary bundles inventory, but also configuration data.

The concept of bundle containers can provide:
- A framework in order to assemble bundles into full applications and services
- This framework can be guided through a set of rules with which a container must comply in order to minimize deployment problems. These rules can be hard-coded inside the ACs (or HSM) or powered via a rule-engine.

A bundle container can preferably act according to particular rules:
- it is preferably self-consistent: it can be installed standalone i.e. all possible intra-container dependencies have been successfully resolved before it can be used for deployment.
- it comprises Inter-container bundle consistency check: the ACS is able to anticipate conflicting situations, e.g. over-specified systems, bundle versioning conflicts, configuration data conflicts, etc. To achieve this, the ACS can take into account the actual deployment status of the home devices regarding the actual installed containers (i.e. the corresponding bundles, their state and configuration data)

The container self-consistency rules can be based on intra-bundle dependencies, which can be retrieved from bundle manifest information and input from the operator and service providers (see e.g. figure 1):
- Initialization: e.g. bundle startup sequence and level
- Platform-related dependencies: e.g. the required minimum JRE, native platform, and physical requirements (free memory, storage, CPU cycles, etc.)
- Software-related dependencies: e.g. Java imports and exports characterizing the OSGi bundles, and versions of bundles that can be used or need to be upgraded (or eventually rolled-back)
- Service-related dependencies: e.g. service and user related configuration data, OSGi service objects that must be available

The outcome of the process is a sequence of commands that will install/upgrade, start and configure the necessary bundles. These commands can be executed by the ACS (HSM) (figure 2), written to a script file (figure 3), or a combination of both (figure 4).

The bundle container concept addresses at least the following technical problems:
- The very complex dependencies can be delegated to the bundle container functionality;
- Bundle containers can be deployed per-user base, taking care of what applications are running and what external resources they use and share;
- Operators have an overall view of what applications are installed on what service gateway (CPE);
- Incompatibilities, mismatching and missing dependencies can are detected upfront, and can be logged (troubleshooting), analyzed and corrected.

Aspects of the present invention provide at least the following advantages;
- with container management, the service provider or operator has full control over the software contents he distributes towards the service platforms in the home of the user;
- bundle combinations are checked for consistency, duplicates are removed, missing bundles are detected;
- lifecycle management on a group of bundles, handled atomically;
- a consistent service configuration can be provided.

In other words a consistent and controlled software deployment (installation and configuration) for services and applications that consist of multiple bundles can be provided.

In figure 1 the concept of a bundle container 1 has been illustrated. The bundle container 1 comprises dependency information, which is broader than the typical dependency information which can be retrieved in the manifest file in the context of a OSGI platform, which typically comprises dependency information relating to execution environment 1 (Java Runtime environment), to the native environment 4 (platform information) and to the interdependencies 2 (bundle package dependencies). According to embodiments of the present invention, the bundle container comprises further dependency information relating to starting sequence 5, dynamic configuration data 7 (user and/or subscription specific), and static configuration data 6 (server provider specific).

In figure 2 a typical scenario according to embodiments of the present invention has been illustrated. A service platform 20 (CPE/SGW) and auto configuration server/HSM 10 service manager are communicating by means of a TR-069 session in order to auto configure this service platform. All application container management operations can be executed by means of one or more TR-069 sessions. This embodiment has the advantage that is based on prior art technology at the CPE/SGW side and that no changes are required at the CPE/SGW side.

The container management (CM) 11 can be a module which computes and resolves the dependencies. It can receive as an input: container definition, CPE/SGW state (for instance already installed bundles, service date) and can provide as an output a sequence of application container management operations, which is describing all the sequential steps to be performed in order to install the container on the predetermined CPE/SGW.

The deployment/logic (DL) 12 can be a module which translates the application container management operations into a sequence of TR-069 operations. It can receive as an input: the output of the container management (CM) and can provide as an output instructions to the TR-069 session protocol stack 13 what TR-069 operations need to be performed on the predetermined CPE/SGW. A typical sequence can be as follows:
1. the operator associated with the automatic configuration server defines an application container 1 by using the container management functionality 11.
2. The operator selects the CPE/SGW's 20 (individual or group) that requires the application container to be installed.
3. The container management (CM) can create for each individual CPE/SGW a "script" which can comprise all deployment operations that need to be performed. The container management can use all dependency information retrieved from the CPE/SGW and container definition and service data.
4. The container management (CM) 11 passes the "script" to the deployment logic 12 and triggers the deployment logic to deploy the container. The deployment logic can receive the script and can translate it to TR-069 protocol based operations and passes the operations to the TR-069 protocol stack 13.

It is to be noted that the "script" (the output from the container management and input for the deployment logic) can comprise or contain operations on bundle level. For instance:
- Download bundle "X";
- Lifecycle Operations: Start, Stop, Uninstall, Upgrade bundle "X";
- Configure Bundle "X" with parameters "A", "B", "C" etc.;
- Check presence of Service Object "S1", etc.,
- Check disk space storage, CPU availability information, etc.

The deployment logic 12 can interpret the abstract container management 'script' operations and can further translate them to TR-069 remote procedure calls, as for instance Download, SetParameterValues, GetParameterValues, etc., which can be managed by a TR-069 Management agent 21.

In figure 3 another embodiment according to the present invention has been illustrated. A service platform CPE/SGW 20 and an ACS/HSM 10 can communicate by means of a TR-069 session in order to allow the ACS to automatically configure the service platform. The ACS comprises a TR-069 management agent. The concept is analogous with the embodiment described in figure 2, but the deployment logic (DL) 12 is no longer residing at the ACS side. The deployment logic is now embodied as a deployment bundle 121 located at the CPE/SGW side instead. Moreover, the deployment logic does not translate the "script" 1020 (can here be called the deployment file (DF) 1020) to TR-069 operations, but to OSGI local framework and bundle-specific operations.

A consequence is that the "script" 1020 can be fully executed via the deployment bundle 121. All bundle downloads and configuration demands can be performed at the CPE/SGW side. The CPE/SGW 20 can take all initiative to download missing bundles, upgrade bundles, etc. A typical sequence can be as follows:
1. the operator associated with the automatic configuration server defines an application container 1 by using the container management functionality 11.
2. The operator selects the CPE/SGW's 20 (individual or group) that requires the application container to be installed.
3. The container management (CM) can create for each individual CPE/SGW a "script" 1020 which can comprise all deployment operations that need to be performed. The container management can use all dependency information retrieved from the CPE/SGW and container definition, service data.
4. The container module can store the "script" or deployment file (DF) 1020 on for instance a file server. The container management can instruct the TR-069 management agent to download the deployment file (DF) 1020 and to pass it to the deployment bundle 121.

In figure 4 a further embodiment has been illustrated which can be considered a mixed case of the previous embodiments described in figures 2 and 3 respectively. Differences are that the lifecycle operations are coordinated by the ACS 10 and that the deployment file (DF) 1020 comprises configuration data only and can thus be called configuration file (CF) 1020*. This configuration file can be dumped on the file server. Lifecycle operations can be coordinated or orchestrated by the ACS side via the deployment logic.

This embodiment provides a performance advantage: all configuration data can be dumped in one step, and not via a tedious sequence of TR-069 session parameter value messages.

A typical sequence can be as follows:
1. the operator associated with the automatic configuration server defines an application container 1 by using the container management functionality 11.
2. The operator selects the CPE/SGW's 20 (individual or group that requires the application container to be installed.
3. The container management (CM) 11 can create for each individual CPE/SGW a "script" 1020* which can comprise all deployment operations that need to be performed. The container management can use all dependency information retrieved from the CPE/SGW and container definition, service data.
4. The container management stores the "script" configuration file (CF) 1020* on a file server. The container management can instruct the TR-069 management agent to download the deployment file and to pass it to the deployment bundle 121. The lifecycle operations can be coordinated or orchestrated by the ACS side via the deployment logic and the container management 11 can instruct the management agent 21 when to execute the configuration file.

In figure 5 a high level flow chart illustrating embodiments of the present invention has been depicted. The bundle container specification 1 can be created by means of the ACS graphical user interface (GUI)(HSM GUI) or for instance by means of an offline tool. The service platform state/information can for instance be retrieved from the service platform (CPE/SGW) 20 or can be put in a cache memory (or database) in the automatic configuration server/HSM. The information from the bundle container 1 specification can then be compared with the information of the service platform state/information by the bundle container management according to predetermined dependence rules. The bundle container management can then generate a sequence of deployment commands based on that comparison.

While some embodiments and/or aspects described herein include some but not other features included in other embodiments and/or aspects, combinations of features of different embodiments and/or aspects are meant to be within the scope of the invention, and can form different embodiments, as would be understood by the skilled person.

While the principles of the invention have been set out above in connection with specific embodiments, it is to be clearly understood that this description is merely made by way of example and not as a limitation of the scope of protection which is determined by the appended claims.

## Claims

1. A method for automatically installing an application or service on a customer premises equipment, CPE (20), which comprises lifecycle management operations, by means of an associated automatic configuration server, ACS (10), according to the TR-069 specification of the Broadband Forum, the method comprising the step of dependency checking during the process of installation of said application or service on said CPE (20), **characterised in that** said method further comprises checking for dependency information for the application or service, to be installed on said CPE (20), by said ACS (10) before installing said application on said CPE (20), wherein said CPE (20) comprises an OSGI platform that supports lifecycle management operations, wherein said dependency information comprises application dependency information, which is not covered by said bundle dependency information.

2. A method according to claim 1 wherein said dependency information comprises bundle dependency information.

3. A method according to claim 1, wherein the checking of said application dependency information comprises checking system requirements information.

4. A method according to any of the previous claims, further comprising storing dependency information on a dependency information storage means at the ACS (10).

5. A method according to any of the claims 1 to 4, comprising trying to resolve the missing dependencies by said ACS (10) and informing an ACS managing server or GUI controlled by an associated operator that said application cannot be installed when the bundle and/or application dependencies cannot be resolved.

6. A method according to any of the claims 1 to 5, comprising trying to resolve the missing dependencies by said ACS (10) and coordinating the installation and configuration of the service or application on the CPE (20) by said ACS (10), when the dependencies can be resolved by said ACS (10).

7. A method according to any of the claims 1 to 6, comprising resolving the missing dependencies by said ACS (10), and transferring the application together with the resolved missing dependencies to said CPE (20).

8. A method according to claims 3 or 4, wherein only a first part of the resolved missing dependencies are transferred from said ACS (10) to said CPE (20), while a second part of the resolved missing dependencies are retrieved by said CPE (20) itself, being instructed by the ACS (10).

9. A method according to claim 7, comprising transferring at least part of said dependency information from said ACS (10) to said CPE (20), and using this information when installing said application on and by said CPE (20).

10. An automatic configuration server ACS (10) according to TR-069 of the broadband forum, adapted for managing at least one CPE (20) **characterized in that** the CPE supports lifecycle management operations according to TR-069, and the ACS further comprising a means for checking for application dependencies which are not covered by said bundle dependencies, for an application to be installed on said CPE (20).

11. An ACS (10) according to claim 10, further comprising a data storage means for storing said application dependencies.

12. A customer premises equipment CPE (20) according to TR-069 specification of the Broadband Forum comprising an OSGI platform, **characterised in that** the OSGI is adapted to support lifecycle management operations and the CPE is adapted for receiving from an automatic configuration server ACS according to claim 10 or 11 and storing dependency information for an application to be installed, said dependency information comprising application dependency information which is not covered by said bundle dependency information.

## Patentansprüche

1. Verfahren für die automatische Installation einer Anwendung oder eines Dienstes auf einem Teilnehmeranschluss-Endgerät, CPE (20), welches Nutzungszeit-Verwaltungsoperationen umfasst, mittels eines verbundenen automatischen Konfigurationsservers, ACS (10), gemäß der Spezifikation TR-069 des Broadband Forums, wobei das Verfahren umfasst den Schritt der Abhängigkeitsüberprüfung während des Prozesses der Installation besagter Anwendung bzw. Dienstes auf besagtem CPE (20), **dadurch gekennzeichnet, dass** besagtes Verfahren weiterhin umfasst das Überprüfen auf Abhängigkeitsinformation für die Anwendung oder den Dienst, die auf besagtem CPE (20) installiert werden sollen, durch besagten ACS (10), vor der Installation besagter Anwendung auf besagtem CPE (20), wobei besagtes CPE (20) eine OSGI-Plattform umfasst, die Nutzungszeit-Verwaltungsoperationen unterstützt, wobei besagte Abhängigkeitsinformation Anwendungsabhängigkeitsinformation umfasst, die nicht von besagter Bundle-Abhängigkeitsinformation abgedeckt wird.

2. Verfahren nach Anspruch 1, wobei besagte Abhängigkeitsinformation Bundle-Abhängigkeitsinformation umfasst.

3. Verfahren nach Anspruch 1, wobei das Überprüfen besagter AnwendungsAbhängigkeitsinformation das Überprüfen der Systemanforderungsinformation umfasst.

4. Verfahren nach einem beliebigen der vorhergehenden Ansprüche, weiterhin umfassend das Speichern der Abhängigkeitsinformation auf einem Abhängigkeitsinformations-Speichermedium am ACS (10).

5. Verfahren nach einem beliebigen der Ansprüche 1 bis 4, umfassend das Versuchen des Auflösens der fehlenden Abhängigkeiten durch besagten ACS (10) und Informieren eines ACS-Verwaltungsservers oder GUI, der durch einen verbundenen Operator kontrolliert wird, dass besagte Anwendung nicht installiert werden kann, wenn die Bundle- und/oder Anwendungsabhängigkeiten nicht aufgelöst werden können.

6. Verfahren nach einem beliebigen der Ansprüche 1 bis 5, umfassend das Versuchen des Auflösens der fehlenden Abhängigkeiten durch besagten ACS (10) und Koordinieren der Installation und Konfiguration des Dienstes oder der Anwendung auf dem CPE (20) durch besagten ACS (10), wenn die Abhängigkeiten von besagtem ACS (10) aufgelöst werden können.

7. Verfahren nach einem beliebigen der Ansprüche 1 bis 6, umfassend das Auflösen der fehlenden Abhängigkeiten durch besagten ACS (10) und Übertragen der Anwendung zusammen mit den aufgelösten fehlenden Abhängigkeiten auf besagtes CPE (20).

8. Verfahren nach den Ansprüchen 3 oder 4, wobei nur ein erster Teil der aufgelösten fehlenden Abhängigkeiten von besagtem ACS (10) auf besagtes CPE (20) übertragen wird, während ein zweiter Teil der aufgelösten fehlenden Abhängigkeiten von besagtem CPE (20) selbst empfangen wird, auf Anweisung des ACS (10).

9. Verfahren nach Anspruch 7, umfassend:
Übertragen mindestens eines Teils besagter Abhängigkeitsinformation von besagtem ACS (10) auf besagtes CPE (20) und Verwenden dieser Information, wenn besagte Anwendung auf und mittels besagten CPE (20) installiert wird.

10. Automatischer Konfigurationsserver ACS (10) gemäß TR-069 des Broadband Forums, ausgelegt zum Verwalten von mindestens einem CPE (20), **dadurch gekennzeichnet, dass** das CPE Nutzungszeit-Verwaltungsoperationen gemäß TR-069 unterstützt und der ACS weiterhin umfasst ein Mittel zum Überprüfen von Anwendungsabhängigkeiten, die nicht von besagten Bundle-Abhängigkeiten abgedeckt werden, für eine auf besagtem CPE (20) zu installierende Anwendung.

11. ACS (10) nach Anspruch 10, weiterhin umfassend ein Datenspeichermittel zum Speichern besagter Anwendungsabhängigkeiten.

12. Teilnehmeranschluss-Endgerät CPE (20) gemäß der Spezifikation TR-069 des Broadband Forums, umfassend eine OSGI-Plattform, **dadurch gekennzeichnet, dass** die OSGI ausgelegt ist zum Unterstützen von Nutzungszeit-Verwaltungsoperationen und das CPE ausgelegt ist zum Empfangen von einem automatischen Konfigurationsserver ACS nach Anspruch 10 oder 11 und zum Speichern von Abhängigkeitsinformation für eine zu installierende Anwendung, wobei besagte Abhängigkeitsinformation Anwendungsabhängigkeitsinformation umfasst, die nicht von besagter Bundle-Abhängigkeitsinformation abgedeckt wird.

## Revendications

1. Procédé d'installation automatique d'une application ou d'un service sur un équipement des locaux d'abonné, CPE (20), qui comprend des opérations de gestion du cycle de vie, au moyen d'un serveur d'autoconfiguration, ACS (10) associé, conformément au protocole TR-069 du Broadband Forum, le procédé comprenant l'étape de vérification de dépendance durant le processus d'installation de ladite application ou dudit service sur ledit CPE (20), **caractérisé en ce que** ledit procédé comprend en outre la vérification d'informations de dépendance pour l'application ou le service, à installer sur ledit CPE (20), au moyen dudit ACS (10) avant d'installer ladite application sur ledit CPE (20), dans lequel ledit CPE (20) comprend une plate-forme OSGI qui prend en charge des opérations de gestion du cycle de vie, dans lequel lesdites informations de dépendance comprennent des informations de dépendance d'application, qui ne sont pas couvertes par lesdites informations de dépendance de paquet.

2. Procédé selon la revendication 1, dans lequel lesdites informations de dépendance comprennent des informations de dépendance de paquet.

3. Procédé selon la revendication 1, dans lequel la vérification desdites informations de dépendance d'application comprennent des informations d'exigences du système de vérification.

4. Procédé selon l'une quelconque des revendications précédentes, comprenant en outre le stockage d'informations de dépendance sur un moyen de stockage d'informations de dépendance au niveau de l'ACS (10).

5. Procédé selon l'une quelconque des revendications 1 à 4, consistant à essayer de résoudre les dépendances manquantes au moyen dudit ACS (10) et à informer un serveur de gestion ACS ou une GUI contrôlée par un opérateur associé que ladite application ne peut pas être installée lorsque les dépendances de paquet et/ou d'application ne peuvent pas être résolues.

6. Procédé selon l'une quelconque des revendications 1 à 5, consistant à essayer de résoudre les dépendances manquantes au moyen dudit ACS (10) et à coordonner l'installation et la configuration du service ou de l'application sur le CPE (20) au moyen dudit ACS (10), lorsque les dépendances peuvent être résolues au moyen dudit ACS (10).

7. Procédé selon l'une quelconque des revendications 1 à 6, consistant à résoudre les dépendances manquantes au moyen dudit ACS (10), et à transférer l'application avec les dépendances manquantes résolues vers ledit CPE (20).

8. Procédé selon la revendication 3 ou 4, dans lequel seule une première partie des dépendances manquantes résolues est transférée à partir dudit ACS (10) vers ledit CPE (20), alors qu'une deuxième partie des dépendances manquantes résolues est récupérée par ledit CPE (20) lui-même, commandé par l'ACS (10).

9. Procédé selon la revendication 7 comprenant le transfert d'au moins une partie desdites informations de dépendance à partir dudit ACS (10) vers ledit CPE (20), et l'utilisation de ces informations lorsque l'on installe ladite application sur ledit CPE et au moyen dudit CPE (20).

10. Serveur d'autoconfiguration ACS (10) selon le protocole TR-069 du Broadband Forum, adapté pour gérer au moins un CPE (20) **caractérisé en ce que** le CPE prend en charge des opérations de gestion du cycle de vie selon le protocole TR-069, et l'ACS comprenant en outre un moyen pour vérifier les dépendances d'application qui ne sont pas couvertes par lesdites dépendances de paquet, pour qu'une application soit installée sur ledit CPE (20).

11. ACS (10) selon la revendication 10, comprenant en outre un moyen de stockage de données pour stocker lesdites dépendances d'application.

12. Équipement des locaux d'abonné CPE (20) selon le protocole TR-069 du Broadband Forum comprenant une plate-forme OSGI, **caractérisé en ce que** l'OSGI est adaptée pour prendre en charge des opérations de gestion du cycle de vie et le CPE est adapté pour recevoir, à partir d'un serveur d'autoconfiguration ACS selon la revendication 10 ou 11, et stocker des informations de dépendance pour une application à installer, lesdites informations de dépendance comprenant des informations de dépendance d'application qui ne sont pas couvertes par lesdites informations de dépendance de paquet.
